# EUROPÄISCHE PATENTSCHRIFT

(11) **EP 0 552 174 B1**
(45) Veröffentlichungstag und Bekanntmachung des Hinweises auf die Patenterteilung: **18.12.1996**
(21) Anmeldenummer: 91916308.9
(22) Anmeldetag: 21.09.1991
(51) Int. Cl.: G01N 27/406

(54) **SENSORELEMENT FÜR GRENZSTROMSENSOREN ZUR BESTIMMUNG DES LAMBDA-WERTES VON GASGEMISCHEN**
SENSING ELEMENT FOR BOUNDARY-FLOW SENSORS FOR DETERMINING THE LAMBDA-VALUE OF GAS MIXTURES
ELEMENT DETECTEUR POUR DETECTEURS DE COURANT LIMITE POUR LA DETERMINATION DE LA VALEUR LAMBDA DE MELANGES GAZEUX

(30) Priorität: 12.10.1990 DE 4032436
(43) Veröffentlichungstag der Anmeldung: 28.07.1993
(73) Patentinhaber: ROBERT BOSCH GMBH, 70442 Stuttgart (DE)
(72) Erfinder: FRIESE, Karl-Hermann, D-7250 Leonberg (DE); GRÜNWALD, Werner, D-7016 Gerlingen (DE); WIEDENMANN, Hans-Martin, D-7000 Stuttgart 1 (DE)
(86) Internationale Anmeldenummer: DE9100752
(87) Internationale Veröffentlichungsnummer: WO9207252

(56) Entgegenhaltungen:
- WO-A-90/04171
- WO-A-90/06506
- WO-A-90/10862
- DE-A- 3 744 206
- DE-C- 3 728 289
- DE-C- 3 728 618
- DE-C- 3 809 154

## Beschreibung

### Stand der Technik

Die Erfindung geht aus von einem Sensorelement nach der Gattung des Hauptanspruchs. Bei derartigen Sensorelementen, die nach dem Diffusionsgrenzstromprinzip arbeiten, wird der Diffusionsgrenzstrom bei einer konstanten, an den beiden Elektroden des Sensorelementes anliegenden Spannung gemessen. Dieser Strom ist in einem bei Verbrennungsvorgängen entstehenden Abgas von der Sauerstoffkonzentration solange abhängig, wie die Diffusion des Gases zur Pumpelektrode die Geschwindigkeit der ablaufenden Reaktion bestimmt. Es ist bekannt, derartige, nach dem polarographischen Meßprinzip arbeitende Sensoren in der Weise aufzubauen, daß sowohl Anode als auch Kathode dem zu messenden Gas ausgesetzt sind, wobei die Kathode eine Diffusionsbarriere aufweist, um ein Arbeiten im Diffusionsgrenzstrombereich zu erzielen.

Die bekannten Grenzstromsensoren dienen in der Regel zur Bestimmung des λ-Wertes von Gasgemischen, der das Verhältnis "Gesamtsauerstoff/zur vollständigen Verbrennung des Kraftstoffs benötigten Sauerstoff" des in einem Zylinder verbrennenden Luft/Kraftstoffgemisches bezeichnet, wobei die Sensoren den Sauerstoffgehalt des Abgases über eine Grenzstrommessung mit einer in einem vorgegebenen Bereich liegenden Pumpspannung anzeigen.

Aufgrund einer vereinfachten und kostengünstigen Herstellungsweise hat sich in der Praxis in den letzten Jahren die Herstellung von Sensorelementen in Keramiktollen- und Siebdrucktechnik als vorteilhaft erwiesen.

In einfacher und rationeller Weise lassen sich planare Sensorelemente ausgehend von plättchen- oder folienförmigen sauerstoffleitenden Festelektrolyten, z. B. aus stabilisiertem Zirkondioxid, herstellen, die beidseitig mit je einer inneren und äußeren Pumpelektrode mit dazugehörigen Leiterbahnen beschichtet werden. Die innere Pumpelektrode befindet sich dabei in vorteilhafter Weise im Randbereich eines Diffusionskanals, durch den das Meßgas zugeführt wird, und der als Gasdiffusionswiderstand dient.

Aus der DE-OS 35 43 759 sowie den EP-A 0 142 993, 0 188 900 und 0 194 082 sind ferner Sensorelemente und Detektoren bekannt, denen gemein ist, daß sie jeweils eine Pumpzelle und eine Sensorzelle aufweisen, die aus plättchen- oder folienförmigen sauerstoffleitenden Festelektrolyten und zwei hierauf angeordneten Elektroden bestehen und einen gemeinsamen Diffusionskanal aufweisen.

Nachteilig an Sensorelementen des beschriebenen Typs ist, daß der vordere, dem zugeführten Meßgas zugewandte Teil der inneren Pumpelektrode stärker als der hintere, dem zugeführten Meßgas abgewandte Teil der Pumpelektrode beansprucht wird. Dies führt zu einer hohen Elektrodenpolarisation, die eine hohe Pumpspannung erfordert. Letztere wiederum birgt die Gefahr einer Elektrolytzersetzung im Bereich der inneren Pumpelektrode in sich.

Um diesen Nachteil zu überwinden, ist es aus der DE-OS 37 28 618 bekannt, im Diffusionskanal eines Sensorelementes für Grenzstromsensoren mindestens zwei einander gegenüber angeordnete innere Pumpelektroden anzuordnen. Dadurch wird die bei Sensorelementen mit nur einer inneren Pumpelektrode leicht auftretende nachteilige Elektrodenpolarisation deutlich verringert. Gleichzeitig wird eine bessere Ausnutzung des zur Ausbildung der Pumpelektroden benötigten Edelmetalles erreicht.

Ein Sensorelement, das ebenfalls aus einer Pumpzelle und einer Nernstzelle besteht, geht aus DE 37 44 206 A1 hervor. Zur Vermeidung von zeitlichen Änderungen der Ausgangskennwerte ist vorgesehen, die Pumpzelle und die Nernstzelle jeweils in zwei Teilzellen aufzuspalten. Dadurch sind in einer Gasdiffusionskammer zwei innere Pumpelektroden der Pumpzellen und zwei Abgaselektroden der Nernstzellen angeordnet. Eine Beabstandung der Abgaselektrode von der jeweiligen inneren Pumpelektrode in der Ebene der Großfläche der Gasdiffusionskammer ist nicht vorgesehen.

Die Lehre der DE 37 28 618 C1 offenbart einen Grenzstromsensor mit einer äußeren Pumpelektrode und einer in einem Diffusionskanal angeordneten inneren Pumpelektrode. Die innere Pumpelektrode ist so ausgeführt, daß sich im Diffusionskanal zwei kurzgeschlossene Teilelektroden gegenüberliegen. Dadurch wird erreicht, daß die wirksame Pumpelektrodenoberfläche am Elektrodenanfang erhöht wird, wodurch die Notwendigkeit der Erhöhung der Pumpspannung entfällt und somit eine geringere Elektrodenbelastung auftritt.

Aus der EP-A- 0 194 082 ist ferner ein Sensorelement zur Bestimmung der Konzentration einer Gaskomponente in Gasen, insbesondere den Abgasen von Verbrennungskraftmaschinen bekannt, das im wesentlichen aus einer Pumpzelle mit zwei Pumpelektroden und einer Fühlerzelle mit zwei weiteren Elektroden besteht. Dieses Sensorelement weist jedoch einen vergleichsweise aufwendigen Aufbau auf, der einen Hilfspumpstrom auf die abgasseitige Elektrode der Nernstzelle aufprägt und damit einen vergleichbar hohen Sauerstoffpartialdruck sowohl über der Kathode der Pumpzelle als auch über der abgasseitigen Elektrode der Nernstzelle bewirkt.

### Vorteile der Erfindung

Das erfindungsgemäße Sensorelement mit den kennzeichnenden Merkmalen des Hauptanspruches hat demgegenüber den Vorteil, daß es vergleichsweise leicht herstellbar ist und daß die Pumpzelle des Sensorelementes wirksam vor Überbelastung geschützt wird, so daß eine beträchtlich verbesserte Dauerbeständigkeit des Sensorelementes erreicht wird. Wesentliches Merkmal des erfindungsgemäßen Sensorelementes ist somit die Anordnung einer Nernstelektrode im Diffusionsspalt hinter einer auf den beiden Seiten des Diffusionsspaltes angeordneten Doppelpumpelektrode. Das erfindungsgemäße Sensorelement weist somit einen Diffusionsspalt auf, der in Richtung auf den Luftreferenzkanal für die die Abgaselektrode bildende Nernstelektrode erweitert ist. In vorteilhafter Weise weist der Diffusionsspalt dabei eine als Diffusionsbarriere wirksame poröse Füllung auf. Im Falle eines erfindungsgemäßen Sensorelementes kann der Sauerstoffpartialdruck an der Nernstelektrode im Diffusionsspalt im stationären Zustand nicht größer sein als der an der Pumpelektrode. Die Pumpzelle kann somit nicht aufgrund zu hoher Sauerstoffpartialdrücke an der Nernstelektrode auf überhöhte Pumpströme geregelt werden. Die Meßspannung der Nernstelektrode wird nicht durch eine Pumpstrombelastung verfälscht, da sie nicht mit der Pumpelektrode im Diffusionsspalt kurzgeschlossen ist. Durch die Doppel-Pumpelektrode ist (PO₂)_{Nernst} ≈ (PO₂)ₚₘ gesichert.

Gemäß einer vorteilhaften Ausgestaltung der Erfindung ist die Luftreferenzelektrode der Nernstzelle im Luftreferenzkanal angeordnet.

Gemäß einer weiteren vorteilhaften Ausgestaltung der Erfindung ist die Luftreferenzelektrode der Nernstzelle unter der Abgaselektrode der Nernstzelle angeordnet und weist eine poröse Abdeckung für den Zutritt von Luft aus dem Luftreferenzkanal auf. Sind in vorteilhafter Weise die Außenelektroden im Verhältnis zu den inneren Pumpelektroden ferner vergrößert, so kann ihre Oberfläche in vorteilhafter Weise bis zu 3 mal so groß sein wie die Oberfläche der inneren Pumpelektroden. In vorteilhafter Weise kann ferner über der äußeren Pumpelektrode eine poröse Deckschicht angeordnet sein.

Das erfindungsgemäße Sensorelement läßt sich anstelle bekannter Sensorelemente planarer Struktur in Breitbandsensoren verwenden und als solches in ein übliches Sensorgehäuse, z. B. des aus den DE-OS 32 06 903 und 35 37 051 bekannten Typs einbauen und zur Messung des Kraftstoff-Luft-Verhältnisses in Abgasen verwenden.

### Zeichnung

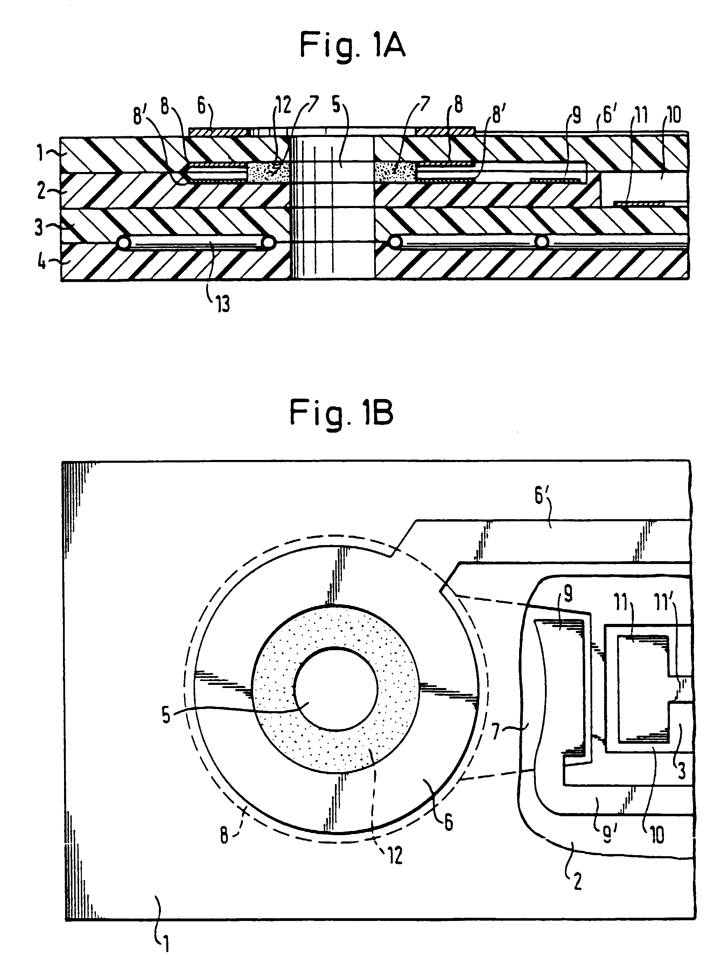

Fig. 1A ist eine schematische, stark vergrößerte Darstellung eines Schnitts durch eine in Keramikfolien- und Siebdrucktechnik herstellbare, vorteilhafte Ausführungsform eines Sensorelementes nach der Erfindung. Es besteht im wesentlichen aus vier zusammenlaminierten Festelektrolytfolien 1,2,3 und 4 mit der ausgestanzten zentralen Meßgaszuführöffnung 5, der ringförmig um die Meßgaszuführöffnung 5 angeordneten äußeren Pumpelektrode 6, den ebenfalls ringförmig um die Meßgaszuführöffnung 5 im Diffusionskanal 7 einander gegenüber angeordneten inneren Pumpelektroden 8,8', der Abgaselektrode 9 sowie der im Luftreferenzkanal 10 angeordneten Luftreferenzelektrode 11, die zusammen mit der Abgaselektrode eine Nernstzelle bildet, der porösen Tunnelfüllung 12 vor den inneren Pumpelektroden 8,8' und schließlich dem Heizer 13. Die ringförmigen, dem Meßgas ausgesetzten Elektroden, 6, 8 und 8' sind an Leiterbahnen angeschlossen, z. B. die Elektrode 6 an die Leiterbahn 6', wobei unter den Leiterbahnen eine Isolierschicht, z. B. eine Al₂o₃-schicht, angeordnet ist. Die Leiterbahnen sind an eine nicht dargestellte Spannungsquelle angeschlossen, z. B. eine Batterie mit einer Arbeitsspannung im Bereich von 0,5 bis 1,0 Volt, deren Polarität abhängig vom λ-Wert des Abgases eingestellt wird. In vorteilhafter Weise sind die äußere Pumpelektrode und die dazugehörige Leiterbahn mit einer porösen Deckschicht, z. B. aus Magnesium-Spinell, abgedeckt.

Fig. 1B ist eine schematische, stark vergrößerte Darstellung des Sensorelementes gemäß Fig. 1A in Aufsicht mit zusätzlich dargestellten Leiterbahnen 9' und 11'.

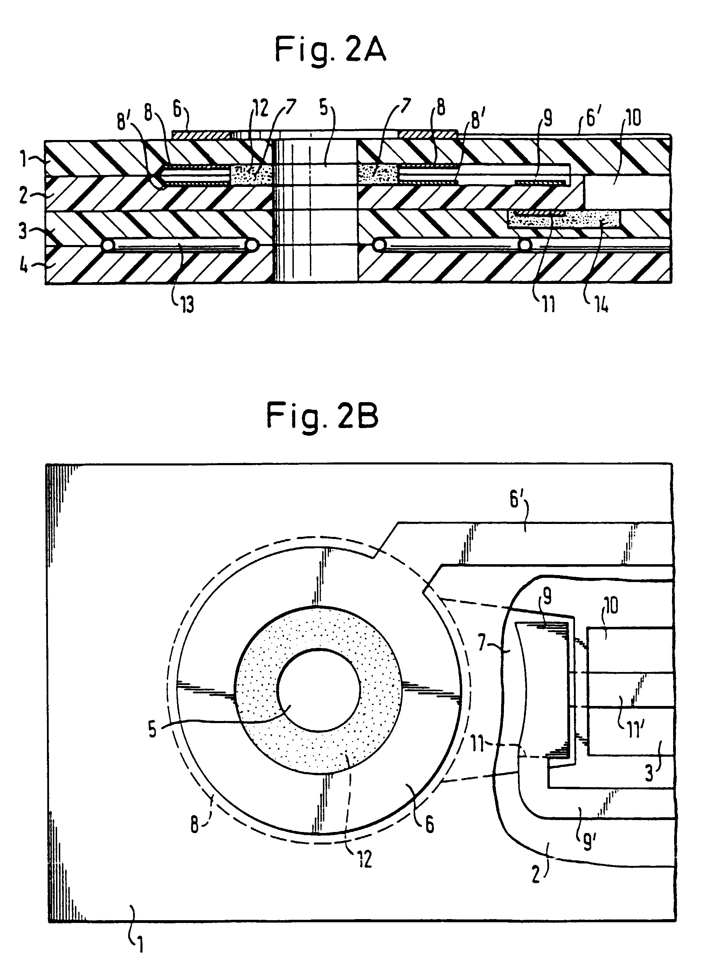

Fig. 2A ist eine weitere schematische, stark vergrößerte Darstellung eines Schnitts durch eine zweite in Keramikfolien- und Siebdrucktechnik herstellbare, vorteilhafte Ausführungsform eines Sensorelementes nach der Erfindung, die sich von der in den Fig. 1A und 1B dargestellten Ausführungsform lediglich dadurch unterscheidet, daß die Luftreferenzelektrode 11 nicht im Luftreferenzkanal 10, sondern unterhalb der Abgaselektrode 9 angeordnet ist. In diesem Falle ist die Luftreferenzelektrode 11 mit einer porösen Abdeckung 14 versehen, die einen Zutritt von Luft aus dem Luftreferenzkanal 10 ermöglicht.

Fig. 2B ist eine schematische, stark vergrößerte Darstellung des Sensorelementes gemäß Figur 2A in Aufsicht.

Zur Herstellung erfindungsgemäßer Sensorelemente geeignete sauerstoffioneneleitende Festelektrolyte sind insbesondere solche auf Basis von ZrO₂, HfO₂, CeO₂ und ThO₂. Als besonders vorteilhaft hat sich die Verwendung von Plättchen und Folien aus mit Yttrium stabilisiertem Zirkoniumdioxid (YSZ) erwiesen.

Die Plättchen und Folien haben dabei vorzugsweise eine Dicke von 0,25 bis 0,3 mm.

Die Pumpelektroden bestehen vorzugsweise aus einem Metall der Platingruppe, insbesondre Platin, oder aus Legierungen von Metallen der Platingruppe oder Legierungen von Metallen der Platingruppe mit anderen Metallen. Sie enthalten in vorteilhafter Weise ein keramisches Stützgerüstmaterial, z. B. YSZ-Pulver, mit einem Volumenanteil von vorzugsweise etwa 40 Vol-%. Sie sind porös und weisen eine Dicke von vorzugsweise 8 bis 15 µm auf. Die zu den Pumpelektroden gehörenden Leiterbahnen bestehen vorzugsweise ebenfalls aus Platin oder einer Platinlegierung des beschriebenen Typs. Pumpelektroden und Leiterbahnen können mittels bekannter Verfahren auf den Festelektrolytträger aufgebracht werden, beispielsweise durch Siebdrucken. Zwischen der die äußere Pumpelektrode mit einer in der Zeichnung nicht dargestellten Spannungsquelle verbindenden Leiterbahn und dem Festelektrolytträger befindet sich in der Regel eine Isolationsschicht, z. B. aus Al₂O₃. Sie kann beispielsweise eine Stärke von etwa 15 µm haben. Die Vereinigung der einzelnen, das Sensorelement bildenden Folien oder Plättchen kann mittels eines in der Keramikfolien- und Siebdrucktechnik üblichen Verfahrens erfolgen, bei dem die Folien zusmmengefügt und auf Temperaturen von etwa 100°C erhitzt werden. Dabei kann gleichzeitig der Diffusionskanal vorbereitet werden. In vorteilhafter Weise wird dieser mittels eines eingestanzten Schlitzes in Folie 2 oder in Dickschichttechnik eingebracht, beispielsweise durch eine Theobrominsiebdruckschicht, wobei das Theobromin beim späteren Sinterprozeß verdampft wird. Zur Erzeugung des Diffusionskanals ebenfalls verwendbar sind beispielsweise Thermalrußpulver, die beim Sinterprozeß ausbrennen oder Ammoniumcarbonat, das verdampft.

Weist der Diffusionskanal in vorteilhaften Weise eine poröse Füllung auf, so kann beispielsweise anstelle einer Theobromin-siebdruckschicht eine Schicht aus Theobromin oder einem anderen verdampf- oder verbrennbaren Material und einem Material, das bei der Sintertemperatur des Festelektrolytsubstrates noch nicht dicht sintert, z. B. grobkörniges ZrO₂, Mg-Spinell oder Al₂O₃ mit einer Korngröße von z. B. 10 µm verwendet werden.

### Beispiel

Zur Herstellung eines Sensorelementes des in Fig. 1A und 1B schematisch dargestellten Typs wurden Folien aus mit Yttrium stabilisiertem Zirkoniumdioxid einer Schichtstärke von 0,3 mm verwendet. Das Aufbringen der aus Platin bestehenden Pumpelektroden sowie der Elektroden der Nernstzelle, d. h. der Abgaselektrode und der Referenzelektrode auf die Trägerfolien erfolgte nach bekannter Siebdrucktechnik, wobei auf die die äußere Pumpelektrode tragende Oberfläche der Trägerfolien im Bereich der Leiterbahn der äußeren Pumpelektrode zuvor eine 20 µm dicke Al₂O₃-Isolationsschicht aufgetragen wurde. Die ringförmigen Pumpelektroden hatten einen Außendurchmesser von 2,8 mm und einen Innendurchmesser von 1,4 mm bei einer Dicke von 12 µm. Die Leiterbahnen wurden ausgehend von einer üblichen Pt-Cermetpaste aus 85 Gew.-Teilen Pt-Pulver und 15 Gew.-Teilen YSZ-Pulver erzeugt. Der Diffusionskanal wurde in Dickschichttechnik durch eine Theobromin-Siebdruckschicht eingebracht, wobei das Theobromin beim späteren Sinterprozeß im Temperaturbereich um 300°C unter Hinterlassen eines etwa 30 µm hohen und 1,3 mm tiefen Ringspaltes verdampft wurde. Die die aufgedruckten Elektroden und Leiterbahnen aufweisenden Folien wurden mit weiteren Folien mit einem aufgedruckten Heizer zusammenlaminiert. Die eingestanzte zentrale Meßgaszufuhröffnung hatte einen Durchmesser von 0,25 mm. Der Luftreferenzkanal wurde in Folie 2 eingestanzt. Nach dem Bedrucken der Trägerfolien, d. h. nach Aufbringen der Elektroden, Leiterbahnen, Isolierschicht sowie gegebenenfalls Deckschicht auf die äußere Pumpelektrode wurden die Folien nach Zusammenfügen einem Sinterprozeß unterworfen, bei dem sie etwa Stunden lang auf eine Temperatur im Bereich von 1380°C erhitzt wurden.

Die hergestellten Sensorelemente wurden im Sensorgehäuse des aus den DE-OS 32 06 903 und 35 37 051 bekannten Typs eingebaut und zur Messung des Kraftstoff-Luft-Verhältnisses in mageren und fetten Abgasen verwendet.

## Patentansprüche

1. Sensorelement für Grenzstromsensoren zur Bestimmung des λ-klertes von Gasgemischen, insbesondere von Abgasen von Verbrennungsmotoren, mit einer Pumpzelle, die auf sauerstoffionenleitenden Festelektrolytfolien (1, 2, 3, 4) angeordnete äußere Pumpelektroden (6) und innere Pumpelektroden (8, 8') aufweist, die ringförmig um eine zu einem Diffusionskanal (7) für das Meßgas führenden Meßgasöffnung (5) angeordnet sind, wobei die innere Pumpelektrode (8) im Diffusionskanal (7) angeordnet und mit einer im Diffusionskanal (7) angeordneten zweiten inneren Pumpelektrode (8') kurzgeschlossen ist, und wobei der Diffusionskanal (7) eine Gasdiffusionskammer bildet, die sich in der Ebene der Großfläche der Festelektrolytfolien erstreckt, dadurch gekennzeichnet, daß das Sensorelement zusätzlich eine Nernstzelle aufweist mit einer im Diffusionskanal (7) angeordneten Abgaselektrode (9) und einer in einem Luftreferenzkanal (10) angeordneten Luftreferenzelektrode (11) daß die Gasdiffusionskammer in der Ebene der Großfläche und in Richtung des Luftreferenzkanals (10) eine Erweiterung aufweist, und daß in der Erweiterung die Abgaselektrode (9) angeordnet ist, derart, daß sich die Abgaselektrode (9) beabstandet von der inneren Pumpelektrode (8, 8') in der Ebene der Großfläche in Diffusionsrichtung des Meßgases hinter der inneren Pumpelektrode (8, 8') befindet.

2. Sensorelement nach Anspruch 1, dadurch gekennezichnet, daß die Luftreferenzelektrode (11) der Nernstzelle im Luftreferenzkanal (10) angeordnet ist.

3. Sensorelement nach Anspruch 1, dadurch gekennzeichnet, daß die Luftreferenzelektrode (11) der Nernstzelle unter der Abgaselektrode (9) der Nernstzelle angeordnet ist und eine poröse Abdeckung (14) für den Zutritt von Luft aus dem Luftreferenzkanal (10) aufweist.

4. Sensorelement nach Anspruch 1, dadurch gekennzeichnet, daß der Diffusionskanal (7) eine als Diffusionsbarriere wirksame Füllung (12) enthält.

5. Sensorelement nach Ansprüchen 1 bis 4, dadurch gekennzeichnet, daß die äußere Pumpelektrode (6) im verhältnis zu den inneren Pumpelektroden (8, 8') vergrößert ist.

6. Sensorelement nach einem der Ansprüche 1 bis 5, dadurch gekennzeichnet, daß über der äußeren Pumpelektrode (6) eine poröse Deckschicht angeordnet ist.

7. Sensorelement nach einem der Ansprüche 1 bis 6, dadurch gekennzeichnet, daß es in Keramikfolien- und Siebdrucktechnik hergestellt ist.

8. Sensorelement nach einem der Ansprüche 1 bis 7, dadurch gekennzeichnet, daß es einen Heizer aufweist.

## Claims

1. Sensor element for limit-current sensors for determining the λ value of gas mixtures, especially exhaust gases of internal combustion engines, with a pump cell which has arranged on solid-electrolyte films (1, 2, 3, 4) which conduct oxygen ions outer pump electrodes (6) and inner pump electrodes (8, 8') which are arranged in a ring around a measured-gas opening (5) leading to a diffusion channel (7) for the measured gas, the inner pump electrode (8) being arranged in the diffusion channel (7) and being short-circuited with a second inner pump electrode (8') arranged in the diffusion channel (7), and the diffusion channel (7) forming a gas diffusion chamber which extends in the plane of the major surface of the solid electrolyte films, characterized in that the sensor element additionally has a Nernst cell with an exhaust-gas electrode (9) arranged in the diffusion channel (7) and an air reference electrode (11) arranged in an air reference channel (10), in that the gas diffusion chamber has a widened portion in the plane of the major surface and in the direction of the air reference channel (10), and in that the exhaust-gas electrode (9) is arranged in the widened portion such that the exhaust-gas electrode (9) is situated at a distance from the inner pump electrode (8, 8') in the plane of the major surface, after the inner pump electrode (8, 8') in the direction of diffusion of the measured gas.

2. Sensor element according to Claim 1, characterized in that the air reference electrode (11) of the Nernst cell is arranged in the air reference channel (10).

3. Sensor element according to Claim 1, characterized in that the air reference electrode (11) of the Nernst cell is arranged underneath the exhaust-gas electrode (9) of the Nernst cell and has a porous cover (14) for the entry of air from the air reference channel (10).

4. Sensor element according to Claim 1, characterized in that the diffusion channel (7) contains a filling (12) which acts as a diffusion barrier.

5. Sensor element according to Claims 1 to 4, characterized in that the outer pump electrode (6) is enlarged in relation to the inner pump electrodes (8, 8').

6. Sensor element according to one of Claims 1 to 5, characterized in that a porous top layer is arranged over the outer pump electrode (6).

7. Sensor element according to one of Claims 1 to 6, characterized in that it is produced by ceramic-sheet and screen-printing technology.

8. Sensor element according to one of Claims 1 to 7, characterized in that it has a heater.

## Revendications

1. Elément détecteur pour des détecteurs de courant limite servant à déterminer le coefficient λ de mélanges gazeux, notamment des gaz d'échappement de moteur à combustion interne, comprenant une cellule de pompage avec des électrodes de pompage externes (6) et des électrodes de pompage internes (8, 8') prévues sur des feuilles d'électrolytes solides (1, 2, 3, 4) à conduction ionique d'oxygène, réparties de manière annulaire autour d'une ouverture de gaz de mesure (5) recevant le gaz de mesure d'un canal de diffusion (7), l'électrode de pompage intérieure (8) prévue dans le canal de diffusion (7) étant court-circuitée avec une seconde électrode de pompage intérieure (8') reliée au canal de diffusion (7), ce dernier (7) formant une chambre de diffusion de gaz s'étendant dans le plan de la grande surface des feuilles d'électrolytes solides,
caractérisé en ce que
l'élément détecteur comporte en outre une cellule de Nernst comprenant une électrode de gaz d'échappement (9) placée dans le canal de diffusion (7) et une électrode de référence d'air (11) placée dans un canal de référence d'air (10), la chambre de diffusion de gaz s'étendant dans le plan de la grande surface, en direction du canal de référence d'air (10), est prévue dans l'extension de l'électrode de gaz d'échappement (9) de façon que cette électrode de gaz d'échappement (9) soit écartée de l'électrode de pompage intérieure (8, 8') dans le plan de la grande surface, dans la direction de diffusion du gaz de mesure derrière l'électrode de pompage intérieure (8, 8').

2. Elément détecteur selon la revendication 1,
caractérisé en ce que
l'électrode de référence d'air (11) de la cellule de Nernst se trouve dans le canal de référence d'air (10).

3. Elément détecteur selon la revendication 1,
caractérisé en ce que
l'électrode de référence d'air (11) de la cellule de Nernst se trouve sous l'électrode de gaz d'échappement (9) de la cellule de Nernst et comporte un revêtement poreux (14) pour le passage de l'air provenant du canal de référence d'air (10).

4. Elément détecteur selon la revendication 1,
caractérisé en ce que
le canal de diffusion (7) comporte un remplissage (12) fonctionnant comme barrière de diffusion.

5. Elément détecteur selon les revendications 1 à 4,
caractérisé en ce que
l'électrode de pompage extérieure (6) est plus grande par rapport aux électrodes de pompage intérieures (8, 8').

6. Elément détecteur selon l'une des revendications 1 à 5,
caractérisé en ce que
une couche de recouvrement poreuse est prévue par-dessus l'électrode de pompage extérieure (6).

7. Elément détecteur selon l'une des revendications 1 à 6,
caractérisé en ce que
il est réalisé avec une feuille de céramique et impression sérigraphique.

8. Elément détecteur selon l'une des revendications 1 à 7,
caractérisé en ce que
il comporte un élément chauffant.
